# FASCICULE DE BREVET EUROPEEN

(11) **EP 4 026 961 B1**
(45) Date de publication et mention de la délivrance du brevet: **26.04.2023**
(21) Numéro de dépôt: 22159081.3
(22) Date de dépôt: 27.04.2020
(51) Int. Cl.: E04G 7/30, B23K 33/00, B23K 31/02, F16B 7/20

(54) **PROCEDE D'ASSEMBLAGE ENTRE UNE EXTREMITE EN ALUMINIUM D'UN MONTANT TUBULAIRE DE TOUR D'ETAIEMENT ET UNE BAGUE DE PROTECTION EN ACIER**
VERFAHREN ZUM ZUSAMMENBAU EINES ENDSTÜCKS AUS ALUMINIUM EINES ROHRTRÄGERS EINES STÜTZTURMS MIT EINEM SCHUTZRING AUS STAHL
ASSEMBLY METHOD BETWEEN AN ALUMINIUM END OF A TUBULAR POST OF A SUPPORTING TOWER AND A STEEL PROTECTIVE RING

(30) Priorité: 18.06.2019 FR 1906520
(43) Date de publication de la demande: 13.07.2022
(62) Demande divisionnaire de: 20171615.6
(73) Titulaire: ALTRAD COFFRAGE ET ETAIEMENT, 13880 Velaux (FR)
(72) Inventeur: LE PENNEC, Jean, 13450 Grans (FR)
(74) Mandataire: Cabinet Beau de Loménie

(56) Documents cités:
- WO-A1-2015/033074
- DE-A1- 3 641 349
- DE-B3-102008 037 709
- US-A1- 2014 035 279
- US-A1- 2017 182 587
- US-A1- 2017 334 017

## Description

### Domaine Technique

L'invention se rapporte au domaine général des tours d'étaiement. Elle concerne plus précisément l'assemblage entre un montant tubulaire en aluminium d'une tour d'étaiement et une bague de protection en acier.

### Technique antérieure

Les tours d'étaiement sont utilisées dans le domaine de la construction pour aider à l'étayage de coffrage de dalles, de poutres, etc.

Typiquement, les tours d'étaiement sont constituées d'un piètement faisant office de plateforme de départ et d'une structure métallique en étais reposant sur le piètement et pouvant transmettre de fortes charges verticales.

La structure métallique en étais de la tour comprend généralement une pluralité de cadres qui sont assemblés entre eux, d'une part côte à côte horizontalement, et d'autre verticalement par superposition.

Plus précisément, les cadres de la structure métallique de la tour comprennent chacun un montant tubulaire vertical, une lisse supérieure horizontale, et un élément en diagonale jouant le rôle de contreventement.

De façon connue, chaque cadre est muni, pour son assemblage vertical, d'une cloche (ou manchon) d'assemblage qui est solidaire de l'extrémité inférieure de son montant vertical. Cette cloche présente une lumière ou une baïonnette qui est destinée à coopérer avec au moins un pion ou un ergot porté par une extrémité supérieure du montant vertical du cadre inférieur sur lequel est assemblé le cadre.

De plus, au niveau de sa partie supérieure, la structure métallique de la tour se termine généralement par des cadres terminaux dont l'extrémité supérieure de leurs montants verticaux est équipée d'un vérin de tête sur lequel repose un coffrage de dalles ou des poutres à étayer.

Afin d'assurer une protection contre l'usure de ces vérins de tête, les montants verticaux de ces cadres terminaux sont munis à leur extrémité supérieure d'une bague métallique de protection, cette bague étant typiquement soudée sur l'extrémité du montant vertical correspondant.

Par ailleurs, la Demanderesse a conçu et développé une tour d'étaiement particulièrement innovante. En particulier, la structure métallique qui la constitue présente la particularité d'être modulable, multidirectionnelle, et de conception simplifiée, de sorte qu'elle offre une grande liberté quant à son assemblage. En outre, les cadres qui forment la structure métallique de la tour sont réalisés en aluminium, ce qui confère un faible poids à la tour pour un coût peu onéreux.

Les cloches pour l'assemblage vertical des cadres et les bagues destinées à la protection contre l'usure des vérins de tête doivent néanmoins être réalisés dans un métal plus résistant que l'aluminium, typiquement en acier, afin d'éviter qu'ils ne cèdent sous les fortes charges verticales supportées par la tour.

Or, l'assemblage d'une pièce en acier (bague de protection ou cloche d'assemblage) sur un montant tubulaire en aluminium pose d'évidents problèmes notamment du fait que ces métaux sont hétérogènes et non soudables aisément entre eux (le soudage par friction s'avère en particulier trop onéreux). Le document DE3641349 divulgue une tour d'étaiement avec un montant en aluminium et une bague de protection en acier. D'autre part les documents US2017182587, DE102008037709 et EP2236841 divulguent l'assemblage d'éléments tubulaires métalliques dissimilaires par soudure.

### Exposé de l'invention

La présente invention a donc pour but principal de proposer un procédé d'assemblage entre des pièces élaborées dans des métaux hétérogènes qui soit fiable et peu onéreux à réaliser.

Conformément à l'invention, ce but est atteint grâce à un procédé d'assemblage selon la revendication 1 entre une extrémité en aluminium d'un montant tubulaire de tour d'étaiement et une bague de protection en acier, comprenant l'accouplement par insertion entre l'extrémité du montant tubulaire et la bague de protection, l'apport d'aluminium en fusion entre l'extrémité du montant tubulaire et la bague de protection afin de créer au moins un cordon de soudure assurant une liaison par clavetage entre l'extrémité du montant tubulaire et la bague de protection, la bague de protection comprenant une rainure annulaire sur sa périphérie extérieure et l'extrémité du montant tubulaire comprenant un épaulement annulaire interne apte à recevoir la bague de protection, le procédé comprenant l'insertion de la bague de protection à l'intérieur de l'extrémité du montant tubulaire pour venir en butée contre l'épaulement interne de celle-ci, et l'introduction d'aluminium en fusion dans la rainure de la bague de protection entre l'extrémité du montant tubulaire et la bague de protection au travers d'au moins un orifice réalisé au niveau de l'extrémité du montant tubulaire au droit de ladite rainure, le procédé comprenant en outre le comblement de l'orifice de l'extrémité du montant tubulaire par de l'aluminium en fusion.

Par « liaison par clavetage », on entend ici une liaison entre l'extrémité du montant tubulaire et la bague de protection en acier au moyen d'au moins une clavette venant se loger dans une rainure et permettant de lier en rotation ces deux éléments. Le procédé selon l'invention est remarquable en ce qu'il propose un assemblage par clavetage par apport d'aluminium en fusion entre l'extrémité du montant tubulaire et la bague de protection. Ainsi, le cordon de soudure en aluminium vient au contact de l'extrémité du montant tubulaire pour assurer une liaison par clavetage. Il en résulte un procédé d'assemblage fiable, relativement simple à mettre en oeuvre et peu onéreux (notamment par rapport à une opération de soudage par friction).

La bague de protection peut comprendre en outre un épaulement externe au niveau de son extrémité supérieure, cet épaulement externe étant destiné à venir en butée contre l'extrémité du montant vertical lors de l'insertion de la bague de protection.

### Brève description des dessins

[Fig. 1] La figure 1 est une vue schématique en perspective d'une tour d'étaiement à laquelle s'applique la présente invention.
[Fig. 2A-2B] Les figures 2A et 2B représentent un mode de réalisation d'un procédé d'assemblage appliqué à une cloche d'assemblage vertical qui ne fait pas partie de la présente invention.
[Fig. 3A-3B] Les figures 3A et 3B représentent un mode de réalisation du procédé selon l'invention appliqué à une bague de protection contre l'usure.

### Description des modes de réalisation

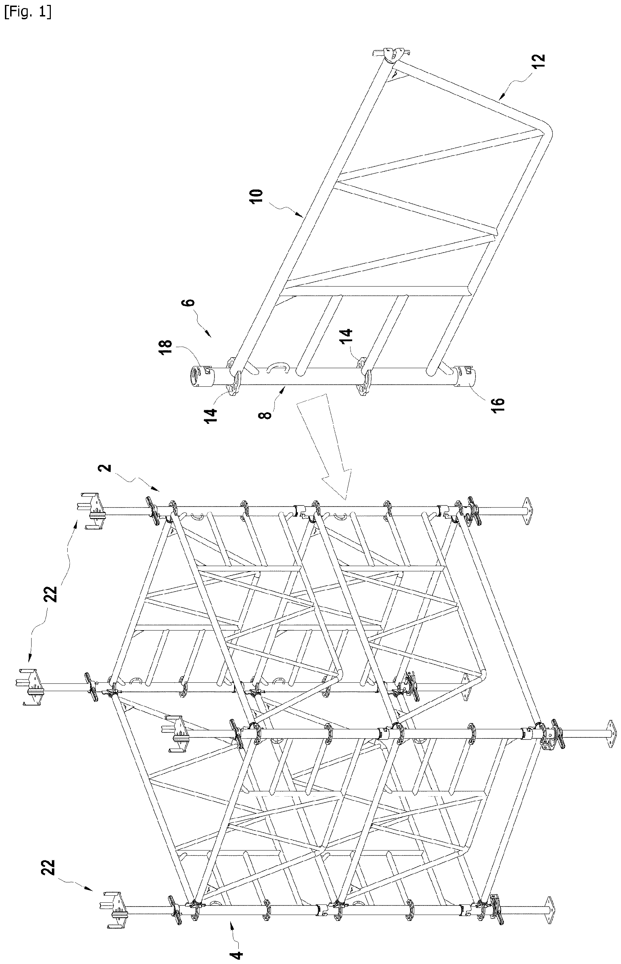

La figure 1 représente, de façon schématique, une tour d'étaiement 2 à laquelle s'applique en particulier le procédé d'assemblage selon l'invention.

De façon connue, cette tour d'étaiement 2 comprend une structure métallique 4 en étais qui est constituée par un assemblage d'une pluralité de cadres 6.

Chaque cadre 6 de la tour comprend notamment un montant tubulaire vertical 8, une lisse supérieure horizontale 10, et un élément 12 en diagonale et coudé jouant le rôle de contreventement.

Chaque cadre 6 de la tour est par ailleurs muni de moyens d'assemblage pour permettre de solidariser les cadres entre eux côté à côte (c'est-à-dire horizontalement) et par superposition (c'est-à-dire verticalement).

Les moyens d'assemblage horizontaux ne sont pas décrits en détails ici. Par exemple, ils peuvent être constitués par des rosaces 14 disposées sur chaque montant vertical 8 des cadres et sur lesquelles viennent s'attacher des lisses horizontales de cadres adjacents par l'intermédiaire de clavettes mobiles (non représentées sur les figures) pouvant être manipulées à la main.

Quant aux moyens d'assemblage verticaux, ils sont par exemple constitués, pour chaque cadre 6, d'une cloche (ou manchon) d'assemblage 16 solidaire d'une extrémité inférieure du montant vertical 8 du cadre, et d'un ou plusieurs pions 18 portés par une extrémité supérieure du montant vertical.

Dans cet exemple, la cloche d'assemblage 16 de chaque cadre comprend une baïonnette 20 qui est destinée à coopérer avec un pion 18 porté par l'extrémité supérieure du montant vertical 8 du cadre situé directement en-dessous. En faisant pivoter le cadre supérieur autour de son axe, il est possible d'assurer alors un verrouillage du pion dans la baïonnette.

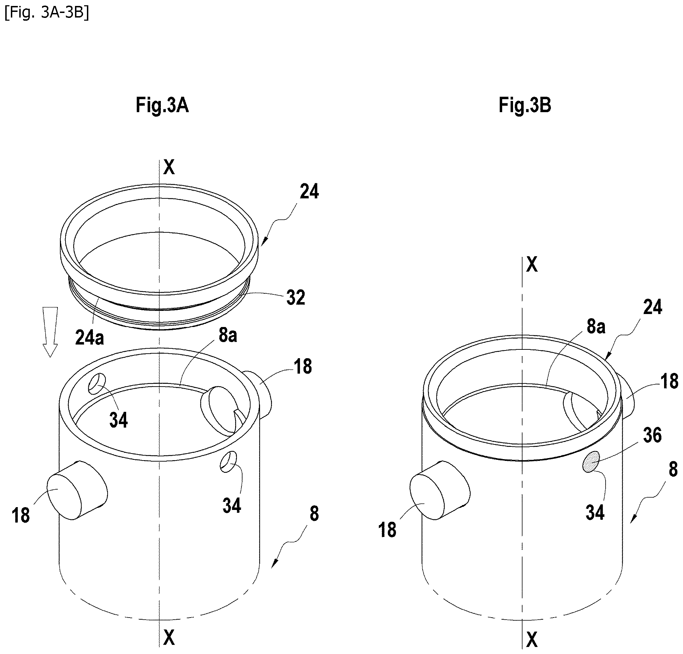

Par ailleurs, au niveau de la partie supérieure de la structure métallique de la tour 6, sont montés des vérins de tête 22 (au nombre de quatre sur la figure 1). Ces vérins de tête 22 sont destinés à reprendre directement les charges d'étaiement. Ils sont chacun montés sur l'extrémité supérieure du montant vertical des cadres terminaux (c'est-à-dire des derniers cadres montés en haut de la tour) par l'intermédiaire d'une bague de protection 24 (voir les figures 3A et 3B).

Selon l'invention, les montants tubulaires verticaux 8 des cadres 6 de la tour sont réalisés en aluminium, tandis que les cloches d'assemblage vertical 16 et les bagues de protection 24 sont réalisées en acier.

Toujours selon l'invention, il est prévu un procédé d'assemblage par clavetage des cloches d'assemblage 16 sur les extrémités inférieures respectives des montants verticaux 8 des cadres, et des bagues de protection 24 sur les extrémités supérieures respectives des montants verticaux des cadres terminaux.

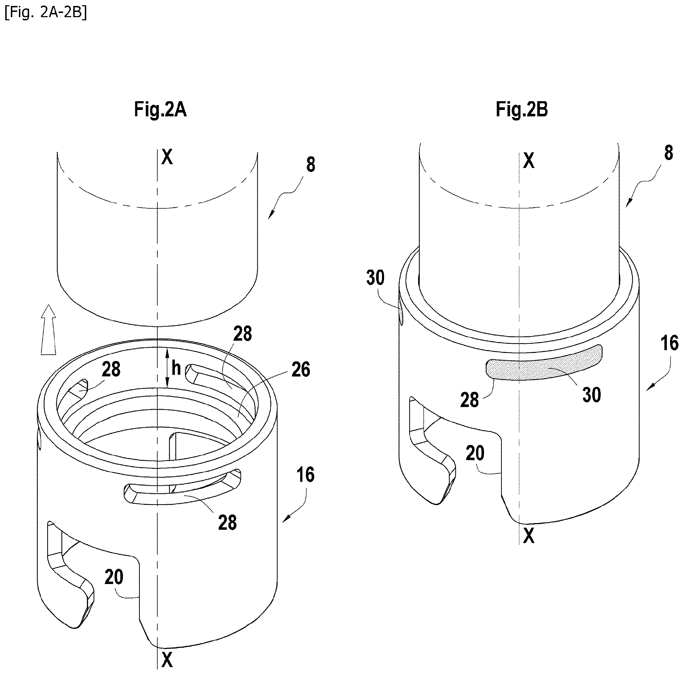

En liaison avec les figures 2A et 2B, on décrira un procédé d'assemblage qui ne fait pas partie de l'invention pour une cloche d'assemblage.

Le procédé d'assemblage prévoit de réaliser un épaulement annulaire interne 26 à l'intérieur de la cloche d'assemblage vertical 16 au niveau d'une extrémité supérieure de celle-ci (c'est-à-dire au niveau de l'extrémité opposée à l'extrémité dans laquelle est formée la baïonnette 20).

Cet épaulement interne 26 prend la forme d'une diminution du diamètre intérieur de la cloche d'assemblage vertical et est positionné à une distance h de l'extrémité supérieure de la cloche.

Le procédé d'assemblage prévoit également de réaliser une pluralité de lumières 28 débouchant au-dessus de l'épaulement interne 26. De préférence, ces lumières 28 sont régulièrement espacées autour d'un axe longitudinal X-X de la cloche. Par exemple, comme représenté sur la figure 2A, elles peuvent être au nombre de trois et être espacées de 120°.

L'assemblage proprement dit consiste à insérer l'extrémité inférieure d'un montant vertical 8 à l'intérieur de la cloche 16, cette extrémité venant alors en butée contre l'épaulement interne 26, puis d'introduire de l'aluminium en fusion dans les lumières 28 de la cloche pour les combler.

En se refroidissant, l'aluminium introduit dans les lumières forme autant de cordons de soudure aluminium/aluminium avec l'extrémité inférieure du montant vertical 8.

Ces cordons de soudure 30 s'apparentent ainsi à des clavettes venant se loger dans les lumières 28 et formant une liaison par clavetage de la cloche d'assemblage vertical 16 sur l'extrémité inférieure du montant vertical 8.

En liaison avec les figures 3A et 3B, on décrira à présent le procédé d'assemblage selon l'invention pour une bague de protection.

La bague de protection 24 comprend un épaulement annulaire externe 24a au niveau de son extrémité supérieure, cet épaulement externe 24a étant destiné à venir en butée contre l'extrémité supérieure du montant vertical 8 dans lequel la bague de protection est insérée.

De même, le montant vertical 8 comprend un épaulement annulaire interne 8a au niveau de son extrémité supérieure, cet épaulement interne étant destiné à venir en butée contre l'extrémité inférieure de la bague de protection lors de l'insertion de cette dernière dans le montant vertical.

Dans cette application, le procédé d'assemblage selon l'invention prévoit de réaliser une rainure annulaire 32 sur toute la périphérie extérieure de la bague de protection 24 au niveau d'une extrémité inférieure de celle-ci.

Cette rainure 32 prend la forme d'une diminution locale du diamètre extérieur de la bague de protection et permet ainsi de laisser un jeu annulaire entre la bague de protection et la surface intérieure de l'extrémité du montant vertical 8 dans lequel la bague de protection est insérée.

Le procédé d'assemblage prévoit également de pratiquer au moins un orifice 34 (deux orifices 34 diamétralement opposées sont représentés sur la figure 3A) au niveau de l'extrémité supérieure du montant vertical 8, cet orifice débouchant au droit de la rainure 32 de la bague de protection lorsque celle-ci est insérée dans le montant vertical.

L'assemblage proprement dit consiste à insérer l'extrémité inférieure de la bague de protection 24 dans le montant vertical 8, l'épaulement externe 24a de la bague de protection venant alors en butée contre l'extrémité supérieure du montant vertical et l'extrémité inférieure de la bague de protection venant en butée contre l'épaulement interne 8a du montant vertical.

On introduit ensuite de l'aluminium en fusion par les orifices 34 pour qu'ils viennent combler toute la rainure 32 de la bague de protection entre l'extrémité supérieure du montant tubulaire et la bague de protection, et combler les orifices.

En se refroidissant, l'aluminium introduit par les orifices 34 forme un cordon de soudure annulaire aluminium/aluminium 36 dans la rainure 32 tout autour de la bague de protection.

Ce cordon de soudure 36 s'apparente ainsi à une clavette venant se loger dans les orifices 34 et formant une liaison par clavetage de la bague de protection sur l'extrémité supérieure du montant vertical 8.

## Revendications

1. Procédé d'assemblage entre une extrémité en aluminium d'un montant tubulaire (8) de tour d'étaiement (2) et une bague de protection (24) en acier, comprenant l'accouplement par insertion entre l'extrémité du montant tubulaire et la bague de protection, l'apport d'aluminium en fusion entre l'extrémité du montant tubulaire et la bague de protection afin de créer au moins un cordon de soudure (36) assurant une liaison par clavetage entre l'extrémité du montant tubulaire et la bague de protection, la bague de protection (24) comprenant une rainure annulaire (32) sur sa périphérie extérieure et l'extrémité du montant tubulaire (8) comprenant un épaulement annulaire interne (8a) apte à recevoir la bague de protection, le procédé comprenant l'insertion de la bague de protection à l'intérieur de l'extrémité du montant tubulaire pour venir en butée contre l'épaulement interne (8a) de celle-ci, et l'introduction d'aluminium en fusion dans la rainure de la bague de protection entre l'extrémité du montant tubulaire et la bague de protection au travers d'au moins un orifice (34) réalisé au niveau de l'extrémité du montant tubulaire au droit de ladite rainure, le procédé comprenant en outre le comblement de l'orifice (34) de l'extrémité du montant tubulaire par de l'aluminium en fusion.

2. Procédé selon la revendication 2, dans lequel la bague de protection (24) comprend en outre un épaulement externe (24a) au niveau de son extrémité supérieure, cet épaulement externe étant destiné à venir en butée contre l'extrémité du montant vertical lors de l'insertion de la bague de protection.

## Patentansprüche

1. Verfahren zur Montage zwischen einem Aluminiumendstück eines rohrförmigen Holms (8) eines Stützturms (2) und einem Schutzring (24) aus Stahl, umfassend das Koppeln durch Einstecken zwischen dem Endstück des rohrförmigen Holms und dem Schutzring, die Zugabe von geschmolzenem Aluminium zwischen dem Endstück des rohrförmigen Holms und dem Schutzring, um wenigstens eine Schweißnaht (36) zu erzeugen, die eine Verbindung durch Verkeilen zwischen dem Endstück des rohrförmigen Holms und dem Schutzring sicherstellt, wobei der Schutzring (24) eine ringförmige Rille (32) auf seinem Außenumfang umfasst und das Endstück des rohrförmigen Holms (8) eine ringförmige innere Schulter (8a) umfasst, welche geeignet ist, den Schutzring aufzunehmen, wobei das Verfahren das Einstecken des Schutzrings in das Endstück des rohrförmigen Holms umfasst, um an dessen innerer Schulter (8a) in Anschlag zu gelangen, und das Einbringen von geschmolzenem Aluminium in die Rille des Schutzrings zwischen dem Endstück des rohrförmigen Holms und dem Schutzring durch wenigstens eine Öffnung (34) im Bereich des Endstücks des rohrförmigen Holms gegenüber der Rille, wobei das Verfahren ferner das Verschließen der Öffnung (34) des Endstücks des rohrförmigen Holms durch geschmolzenes Aluminium umfasst.

2. Verfahren nach Anspruch 1, wobei der Schutzring (24) ferner eine äußere Schulter (24a) im Bereich seines oberen Endstücks umfasst, wobei diese äußere Schulter bestimmt ist, am Endstück des vertikalen Holms bei Einstecken des Schutzrings in Anschlag zu gelangen.

## Claims

1. A method of assembling an aluminium end of a tubular post (8) of a supporting tower (2) to a steel protection ring (24), comprising inserting a coupling between the end of the tubular post and the protection ring, supplying molten aluminium between the end of the tubular post and the protection ring to create at least one weld bead (36) providing a keyed connection between the end of the tubular post and the protection ring, the protection ring (24) comprising an annular groove (32) on its outer periphery and the end of the tubular post (8) comprising an internal annular shoulder (8a) adapted to receive the protection ring, the method comprising inserting the protection ring inside the end of the tubular post to abut against the internal shoulder (8a) thereof, and introducing molten aluminium into the groove of the protection ring between the end of the tubular post and the protection ring through at least one orifice (34) made at the level of the end of the tubular post upright in line with said groove, the method further comprising filling the orifice (34) of the end of the tubular post with molten aluminium.

2. Method according to claim 1, wherein protection ring (24) further comprises an outer shoulder (24a) at its upper end, this outer shoulder being intended to abut against the end of the vertical post when inserting the protection ring.
